# EUROPÄISCHE PATENTSCHRIFT

(11) **EP 4 259 939 B1**
(45) Veröffentlichungstag und Bekanntmachung des Hinweises auf die Patenterteilung: **24.12.2025**
(21) Anmeldenummer: 21782676.7
(22) Anmeldetag: 21.09.2021
(51) Int. Cl.: F04D 19/04, F04D 25/16, G01M 3/20

(54) **VORRICHTUNG ZUR MASSENSPEKTROMETRISCHEN LECKDETEKTION MIT DREISTUFIGER TURBOMOLEKULARPUMPE UND BOOSTERPUMPE**
DEVICE WITH A THREE-STAGES TURBOMOLECULAR PUMP AND A BOOSTER PUMP FOR DETECTING A LEAK WITH A MASS SPECTROMETER
DISPOSITIF AYANT UNE POMPE TURBOMOLÉCULAIRE À TROIS ÉTAGES ET UNE POMPE D'ACCÉLÉRATION POUR DÉTECTER UNE FUITE À L'AIDE D'UN SPECTROMÈTRE DE MASSE

(30) Priorität: 10.12.2020 DE 102020132896
(43) Veröffentlichungstag der Anmeldung: 18.10.2023
(73) Patentinhaber: Inficon GmbH, 50968 Köln (DE)
(72) Erfinder: DECKER, Silvio, 50968 Köln (DE); MATHIOUDAKIS, Simon, 50968 Köln (DE)
(74) Vertreter: dompatent
(86) Internationale Anmeldenummer: PCT/EP2021/075897
(87) Internationale Veröffentlichungsnummer: WO 2022/122206

(56) Entgegenhaltungen:
- WO-A1-2012/104387
- DE-A1- 102014 223 841
- DE-A1- 102016 210 701
- DE-A1- 4 228 313
- US-A1- 2013 028 757

## Beschreibung

Die Erfindung betrifft eine Vorrichtung zur massenspektrometrischen Leckdetektion mit dreistufiger Turbomolekularpumpe und Boosterpumpe.

Bekannt sind massenspektrometrische Leckdetektionsvorrichtungen, bei denen ein Massenspektrometer von einer mehrstufigen Turbomolekularpumpe evakuiert wird, wobei der Auslass der Turbomolekularpumpe über eine Vorvakuumpumpe gegen atmosphärischen Druck evakuiert wird.

Dabei ist es beispielsweise aus DE 10 2014 223 841 A1 bekannt, den zu untersuchenden Prüfling über eine separate Boosterpumpe zu evakuieren, deren Auslass über die Vorvakuumpumpe der massenspektrometrischen Turbomolekularpumpe evakuiert wird. Die Vorvakuumpumpe erzeugt dabei das Vorvakuum sowohl der massenspektrometrischen Turbomolekularpumpe als auch der Boosterpumpe. Die Boosterpumpe ist zweistufig mit einem zwischen den beiden Pumpstufen angeordneten Zwischengasauslass, der gasleitend mit einem Zwischengaseinlass der mehrstufigen, z.B. dreistufigen, Turbomolekularpumpe verbunden ist. Bei der Leckdetektion wird über den Verbindungszweig zwischen der Boosterpumpe und der Turbomolekularpumpe ein Teilstrom abgezweigt und im Gegenstrom durch die Eingangsstufe der Turbomolekularpumpe dem Massenspektrometer zugeführt.

DE 4228313 A1 offenbart einen Gegenstrom-Lecksucher mit einer Hochvakuumpumpe und einer Vorvakuumpumpe.

Prüfgas, meist Helium, kann sich dabei am Auslass der Boosterpumpe ansammeln, wenn die Förderkapazität der Vorvakuumpumpe nicht ausreicht, um das Prüfgas abzuführen. Das angestaute Prüfgas am Auslass der Boosterpumpe kann dabei durch die Ausgangspumpstufe der Boosterpumpe und den Verbindungszweig in den Zwischengaseinlass der Turbomolekularpumpe des Massenspektrometers gelangen und von dort durch die Eingangsstufe der Turbomolekularpumpe in das Massenspektrometer, wo das Prüfgas ein Hintergrundsignal in Form eines Offset-Fehlers erzeugt.

Der Erfindung liegt daher die Aufgabe zugrunde, eine verbesserte Vorrichtung zur massenspektrometrischen Leckdetektion mit mehrstufiger Boosterpumpe und Turbomolekularpumpe zu schaffen.

Die erfindungsgemäße Vorrichtung wird definiert durch Anspruch 1. Demnach ist die massenspektrometrische Turbomolekularpumpe, die zwischen dem Massenspektrometer und der Vorvakuumpumpe angeordnet ist, als mindestens dreistufige Vakuumpumpe ausgebildet, wobei ein erster Zwischengaseinlass zwischen der Eingangspumpstufe und der mittleren Pumpstufe und ein zweiter Zwischengaseinlass zwischen der mittleren Pumpstufe und der Ausgangspumpstufe gebildet ist. Der erste Zwischengaseinlass ist über einen ersten Verbindungszweig mit einem Zwischengasauslass zwischen den beiden Pumpstufen der mindestens zweistufigen Boosterpumpe verbunden, während der Auslass der Boosterpumpe, das heißt der Auslass der Ausgangspumpstufe, mit dem zweiten Zwischengaseinlass der massenspektrometrischen Turbomolekularpumpe über einen zweiten Verbindungzweig verbunden ist.

Dadurch wird erreicht, dass der Auslass der Boosterpumpe nicht lediglich von der Vorvakuumpumpe evakuiert wird, sondern von der Ausgangspumpstufe der massenspektrometrischen Turbomolekularpumpe, die mit der Vorvakuumpumpe in Reihe geschaltet ist. Dadurch wird eine höhere Prüfgas-Partialdruckdifferenz zwischen der Eingangsstufe der Boosterpumpe und dem Einlass der Vorvakuumpumpe erreicht, so dass das Prüfgas - z.B. Helium - besser abtransportiert wird. Dadurch ist ein möglicher Offset-Fehler, der aus anstauendem Prüfgas, welches im Gegenstrom über den ersten Verbindungszweig in das Massenspektrometer strömt, reduziert oder gar vermieden.

Vorzugsweise weisen der erste Verbindungszweig und/oder der zweite Verbindungszweig jeweils ein separat steuerbares Ventil zum selektiven Schließen des jeweiligen Verbindungszweiges auf.

Der erste Verbindungszweig und der zweite Verbindungszweig können durch einen Brückenzweig gasleitend miteinander verbunden sein. Der Brückenzweig weist dabei ebenfalls ein separat steuerbares Ventil zum selektiven Schließen des Brückenzweiges auf. Mit Hilfe des Brückenzweiges ist es möglich, den Auslass der Boosterpumpe über den ersten Zwischengaseinlass, die mittlere Pumpstufe und die Ausgangspumpstufe der Turbomolekularpumpe mit nachfolgender Vorvakuumpumpe zu evakuieren.

Der Einlass der Boosterpumpe ist mit einem Anschluss für den Prüfling versehen. Der Einlass der Boosterpumpe kann über einen Bypasszweig mit dem Einlass der Vorvakuumpumpe und dem Auslass der massenspektrometrischen Turbomolekularpumpe verbunden sein, wobei der Bypasszweig ebenfalls ein separat steuerbares Ventil zum selektiven Schließen des Bypasszweiges aufweist. Über den Bypasszweig kann der Prüfling direkt und ausschließlich über die Vorvakuumpumpe zur Atmosphäre hin evakuiert werden, ohne dass dabei die Boosterpumpe oder die Turbomolekularpumpe den Prüfling evakuieren.

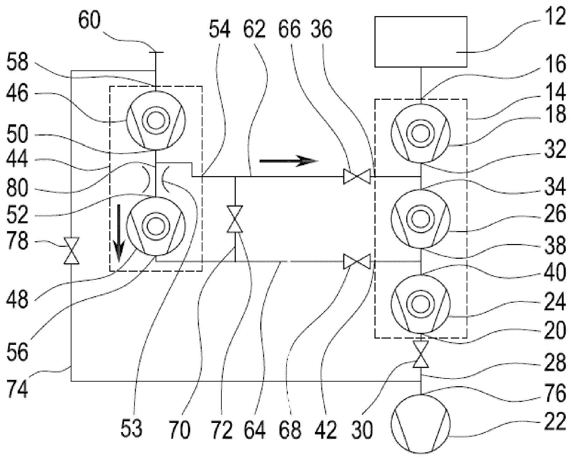

Im Folgenden wird anhand der Figur ein Ausführungsbeispiel der Erfindung näher erläutert. Die Figur zeigt ein Ausführungsbeispiel der erfindungsgemäßen Vorrichtung.

Ein Massenspektrometer 12 wird von einer dreistufigen Turbomolekularpumpe 14 evakuiert, wobei das Massenspektrometer 12 mit dem Einlass 16 der Eingangspumpstufe 18 der Turbomolekularpumpe gasleitend verbunden ist. An den Auslass der Turbomolekularpumpe 14 ist eine Vorvakuumpumpe 22 gasleitend angeschlossen. Der Auslass der Turbomolekularpumpe 14 wird durch den Ausgang 20 der Ausgangspumpstufe 24 gebildet. Zwischen der Eingangspumpstufe 18 und der Ausgangspumpstufe 24 der massenspektrometrischen Turbomolekularpumpe 14 ist eine mittlere Pumpstufe 26 vorgesehen.

Der den Auslass der Turbomolekularpumpe mit der Vorvakuumpumpe 22 verbindende Gasleitungsweg 28 ist mit einem separat steuerbaren Ventil 30 zum selektiven Schließen des Gasleitungsweges 28 versehen.

Der Ausgang 32 der ersten Pumpstufe 18 und der Eingang 34 der mittleren Pumpstufe 26 sind mit einem ersten Zwischengaseinlass 36 der Turbomolekularpumpe 14 gasleitend verbunden.

In entsprechender Weise sind der Ausgang 38 der mittleren Pumpstufe 26 und der Eingang 40 der Ausgangspumpstufe 24 gasleitend mit einem zweiten Zwischengaseinlass 42 verbunden.

Eine zweistufige Boosterpumpe 44 weist eine Eingangs-Boosterpumpstufe 46 und eine Ausgangs-Boosterpumpstufe 48 auf, wobei der Auslass 50 der Eingangs-Boosterpumpstufe 46 und der Eingang 52 der Ausgangs-Boosterpumpstufe 48 gasleitend mit einem Zwischengasauslass 54 der Boosterpumpe 44 verbunden sind. Der Ausgang 56 der Ausgangs-Boosterpumpstufe 48 bildet den Auslass der Boosterpumpe 44.

Der Eingang 58 der Eingangs-Boosterpumpstufe 46 bildet den Einlass der Boosterpumpe 44 und ist gasleitend mit einem Anschluss 60 zum Anschließen des zu untersuchenden Prüflings verbunden.

Der Zwischengasauslass 54 und der erste Zwischengaseinlass 36 sind durch einen ersten Verbindungszweig 62 gasleitend miteinander verbunden.

Der Auslass 56 und der zweite Zwischengaseinlass 42 sind durch einen zweiten Verbindungszweig 64 gasleitend miteinander verbunden.

Der erste Verbindungszweig 62 weist ein separat steuerbares Ventil 66 zum selektiven Verschließen des ersten Verbindungszweiges 62 auf. Der zweite Verbindungszweig 64 weist ein selektiv steuerbares Ventil 68 zum selektiven Verschließen des zweiten Verbindungszweiges 64 auf.

Der erste Verbindungszweig 62 und der zweite Verbindungszweig 64 sind durch einen Brückenzweig 70 gasleitend miteinander verbunden. Der Brückenzweig 70 weist dabei ein selektiv steuerbares Ventil 72 zum selektiven Verschließen des Brückenzweiges 70 auf.

Der Prüflingsanschluss 60 und der Einlass 58 der Boosterpumpe 44 sind über einen Bypasszweig 74 gasleitend mit dem Einlass 76 der Vorvakuumpumpe 22 und mit dem Auslass 20 der massenspektrometrischen Turbomolekularpumpe 14 gasleitend verbunden. Der Bypasszweig 74 weist ein selektiv steuerbares Ventil 78 zum separaten Verschließen des Bypasszweiges 74 auf.

Der den Ausgang 50 der Eingangs-Boosterpumpstufe 46 und den Eingang 52 der Ausgangs-Boosterpumpstufe 48 verbindende Gasleitungsweg 80 ist mit einer im Bereich des Eingangs 52 der Ausgangs-Boosterpumpstufe 48 angeordnete Flussdrossel 53 versehen.

Die beiden Pumpstufen 46, 48 der Boosterpumpe 44 sind auf einer gemeinsamen Welle angeordnet, wobei die Eingangs-Boosterpumpstufe 46 eine Turbomolekularpumpstufe und die Ausgangs-Boosterpumpstufe 48 eine Holweckstufe ist.

Die Pumpstufen 18, 26, 24 der massenspektrometrischen Turbomolekularpumpe 14 können ebenfalls auf einer gemeinsamen Welle angeordnet sein. Die Eingangspumpstufe 18 und die mittlere Pumpstufe 26 können Teil einer zweistufigen Turbomolekularpumpe sein, deren beide Pumpstufen 18, 26 auf einer gemeinsamen Rotorwelle angeordnet sind und dadurch eine gemeinsame Turbomolekularpumpstufe bilden. Die Ausgangspumpstufe 24 kann eine Holweckstufe sein. Die Ausgangspumpstufe 24 kann auf derselben Welle angeordnet sein, wie die beiden Turbomolekularpumpstufen 18, 26.

Die Vorvakuumpumpe 22 ist bevorzugt separat von der massenspektrometrischen Turbomolekularpumpe 14 und von der Boosterpumpe 44 ausgebildet und teilt sich mit diesen auch keine gemeinsamen Rotorwellen. Jedoch ist denkbar, dass die Vorvakuumpumpe 22 auf derselben Rotorwelle angeordnet ist, wie eine oder mehrere Pumpstufen der Turbomolekularpumpe 14 und/oder der Boosterpumpe 44.

Zunächst wird bei geschlossenen Ventilen 66, 68, 30 der an den Prüflingsanschluss 60 angeschlossene Prüfling bei geöffnetem Ventil 78 in dem Bypasszweig 74 von der Vorvakuumpumpe 22 über den Bypassszweig 74 evakuiert. Sobald ein ausreichender Druck am Prüflingsanschluss 60 erreicht ist, wird zusätzlich das Ventil 30 in dem Gasleitungsweg 28 geöffnet, um das Massenspektrometer 12 über die Turbomolekularpumpe 14 und die Vorvakuumpumpe 22 zu evakuieren. In diesem als "Gross" bezeichneten Betriebszustand ist bereits eine Detektion großer Lecks mit dem Massenspektrometer 12 möglich.

Zur eigentlichen Leckdetektion wird, sobald der ausreichende Vakuumdruck im Prüfling bzw. am Prüflingsanschluss 60 erreicht ist, das Ventil 78 im Bypasszweig 74 geschlossen und die Ventile 66, 68 in den Verbindungszweigen 62, 64 geöffnet. Dadurch strömt bei laufender Busterpumpe 44 das Gas aus dem Prüflingsanschluss 60 durch die Verbindungszweige 62, 64 in die Turbomolekularpumpe 14, wo ein Teil des Prüfgases z.B. Helium oder Wasserstoff im Gegenstrom durch die Eingangspumpstufe 18 ins Massenspektrometer 12 gelangt, während der Hauptanteil des Gases über die mittlere Pumpstufe 26, die Ausgangspumpstufe 24 und die Vorvakuumpumpe 22 zur Atmosphäre hin evakuiert wird.

## Patentansprüche

1. Vorrichtung zur Leckdetektion an einem Prüfling mit einem Massenspektrometer (12),
einer mindestens dreistufigen Turbomolekularpumpe (14), mit einer Eingangspumpstufe (18), einer mittleren Pumpstufe (26) und einer Ausgangspumpstufe (24), deren Eingangspumpstufe mit dem Massenspektrometer (12) verbunden ist und die einen zwischen der Eingangspumpstufe (18) und der mittleren Pumpstufe (26) angeordneten ersten Zwischengaseinlass (36) und einen zwischen der mittleren Pumpstufe (26) und der Ausgangspumpstufe (24) angeordneten zweiten Zwischengaseinlass (42) aufweist, und
einer mit einem Auslass (20) der Ausgangspumpstufe (24) der Turbomolekularpumpe (14) verbundenen Vorvakuumpumpe (22), die dazu ausgebildet ist, einen Vorvakuumdruck von weniger als 50 mbar am Auslass (20) der Turbomolekularpumpe (14) zu erzeugen und gegen atmosphärischen Druck zu evakuieren,
**dadurch gekennzeichnet,**
**dass** die Vorrichtung ferner eine mindestens zweistufige Boosterpumpe (44) mit einer Eingangspumpstufe (46) und einer Ausgangspumpstufe (48) aufweist, deren Eingangspumpstufe (46) mit dem zu untersuchenden Prüfling verbindbar ist und die einen zwischen der Eingangspumpstufe (46) und der Ausgangspumpstufe (48) angeordneten Zwischengasauslass (54) aufweist,
**dass** der Zwischengasauslass (54) der Boosterpumpe mit dem ersten Zwischengaseinlass (36) der Turbomolekularpumpe (14) über einen ersten Verbindungszweig (62) gasleitend verbunden ist und
**dass** ein Auslass (56) der Ausgangspumpstufe (48) der Boosterpumpe (44) mit dem zweiten Zwischengaseinlass (42) der Turbomolekularpumpe (14) über einen zweiten Verbindungszweig (64) gasleitend verbunden ist.

2. Vorrichtung nach Anspruch 1, **dadurch gekennzeichnet, dass** der erste Verbindungszweig (62) und/oder der zweite Verbindungszweig (64) ein separat steuerbares Ventil (66, 68) zum Verschließen des Verbindungszweiges aufweist.

3. Vorrichtung nach Anspruch 1 oder Anspruch 2, **dadurch gekennzeichnet, dass** der Einlass der Eingangspumpstufe (46) der Boosterpumpe (44) mit dem Einlass der Vorvakuumpumpe (22) gasleitend über einen Bypasszweig (74) verbunden ist, wobei der Bypasszweig (74) ein separat steuerbares Ventil (78) zum Verschließen des Bypasszweiges (74) enthält.

4. Vorrichtung nach einem der vorhergehenden Ansprüche, dass der erste Verbindungszweig (62) und der zweite Verbindungszweig (64) durch einen Brückenzweig (70) gasleitend miteinander verbunden sind, wobei der Brückenzweig (70) ein separat steuerbares Ventil (72) zum Verschließen des Brückenzweiges (70) aufweisen kann.

5. Vorrichtung nach einem der vorhergehenden Ansprüche, **dadurch gekennzeichnet, dass** der den Ausgang der Ausgangspumpstufe (24) der Turbomolekularpumpe (14) mit dem Einlass der Vorvakuumpumpe (22) verbindende Gasleitungsweg (28) ein separat steuerbares Ventil (30) zum selektiven Schließen des Gasleitungsweges aufweist.

6. Vorrichtung nach einem der vorhergehenden Ansprüche, **dadurch gekennzeichnet, dass** die Eingangs-Boosterpumpstufe (46) eine Rotationsvakuumpumpe ist.

7. Vorrichtung nach einem der vorhergehenden Ansprüche, **dadurch gekennzeichnet, dass** die Ausgangs-Boosterpumpstufe (48) eine Molekularpumpstufe, insbesondere eine Holweckstufe, ist.

8. Vorrichtung nach einem der vorhergehenden Ansprüche, **dadurch gekennzeichnet, dass** die Boosterpumpe eine zweistufige Vakuumpumpe ist.

9. Vorrichtung nach einem der vorhergehenden Ansprüche, **dadurch gekennzeichnet, dass** die Eingangsstufe und die mittlere Stufe der massenspektrometrischen Turbomolekularpumpe (14) eine zweistufige Turbomolekularpumpe (14) bilden.

10. Vorrichtung nach einem der vorhergehenden Ansprüche, **dadurch gekennzeichnet, dass** die Ausgangspumpstufe (24) der massenspektrometrischen Turbomolekularpumpe (14) eine Holweckstufe ist.

11. Vorrichtung nach einem der vorhergehenden Ansprüche, **dadurch gekennzeichnet, dass** die massenspektrometrische Turbomolekularpumpe (14) eine dreistufige Vakuumpumpe ist.

12. Vorrichtung nach einem der vorhergehenden Ansprüche, **dadurch gekennzeichnet, dass** die Pumpstufen (46, 48) der Boosterpumpe auf einer gemeinsamen Welle angeordnet sind und/oder dass die Pumpstufen (18, 24, 26) der massenspektrometrischen Turbomolekularpumpe (14) auf einer gemeinsamen Welle angeordnet sind.

13. Vorrichtung nach einem der vorhergehenden Ansprüche, **dadurch gekennzeichnet, dass** die Vorvakuumpumpe eine von der Boosterpumpe und von der massenspektrometrischen Turbomolekularpumpe (14) unabhängige separate Vakuumpumpe ist.

## Claims

1. A device for leak detection on a test specimen, comprising a mass spectrometer (12),
an at least three-stage turbomolecular pump (14) having an input pump stage (18), an intermediate pump state (26) and an output pump stage (24), the input pump stage of which is connected to the mass spectrometer (12) and has a first intermediate gas inlet (36) arranged between the input pump stage (18) and the intermediate pump stage (26) and a second intermediate gas inlet (42) arranged between the intermediate pump stage (26) and the output pump stage (24), and a pre-vacuum pump (22) connected to the outlet (20) of the output pump stage (24) of the turbomolecular pump (14) and configured to generate a pre-vacuum pressure of less than 50 mbar at the outlet (20) of the turbomolecular pump (14) and to evacuate it against atmospheric pressure,
**characterized in that** the
the device further comprises an at least two-stage booster pump (44) having an input pump stage (46) and an output pump stage (48), the input pump stage (46) of which is connectable to the test specimen to be examined and comprises an intermediate gas outlet (54) arranged between the input pump stage (46) and the output pump stage (48),
the intermediate gas outlet (54) of the booster pump is connected to the first intermediate gas inlet (36) of the turbomolecular pump (14) via a first connecting branch (62) in a gas-conducting manner, and
an outlet (56) of the output pump stage (48) of the booster pump (44) is connected to the second intermediate gas inlet (42) of the turbomolecular pump (14) via a second connecting branch (64) in a gas-conducting manner.

2. The device according to claim 1, **characterized in that** the first connecting branch (62) and/or the second connecting branch (64) has a separately controllable valve (66, 68) for closing the connecting branch.

3. The device according to claim 1 or claim 2, **characterized in that** the inlet of the input pump stage (46) of the booster pump (44) is connected to the inlet of the pre-vacuum pump (22) via a bypass branch (74) in a gas-conducting manner, the bypass branch (74) having a separately controllable valve (78) for closing the bypass branch (74).

4. The device according to any one of the preceding claims, **characterized in that** the first connecting branch (62) and the second connecting branch (64) are connected to each other by a bridge branch (70) in a gas-conducting manner, wherein the bridge branch (70) may have a separately controllable valve (72) for closing the bridge branch (70).

5. The device according to any one of the preceding claims, **characterized in that** the gas conduction path (28) connecting the output of the output pump stage (24) of the turbomolecular pump (14) to the inlet of the pre-vacuum pump (22) has a separately controllable valve (30) for selectively closing the gas conduction path.

6. The device according to any one of the preceding claims, **characterized in that** the input booster pump stage (46) is a rotary vacuum pump.

7. The device according to any one of the preceding claims, **characterized in that** the output booster pump stage (48) is a molecular pump stage, in particular a Holweck stage.

8. The device according to any one of the preceding claims, **characterized in that** the booster pump is a two-stage vacuum pump.

9. The device according to any one of the preceding claims, **characterized in that** the input stage and the intermediate stage of the mass-spectrometric turbomolecular pump (14) form a two-stage turbomolecular pump (14).

10. The device according to any one of the preceding claims, **characterized in that** the output pump stage (24) of the mass-spectrometric turbomolecular pump (14) is a Holweck stage.

11. The device according to any one of the preceding claims, **characterized in that** the mass-spectrometric turbomolecular pump (14) is a three-stage vacuum pump.

12. The device according to any one of the preceding claims, **characterized in that** the pump stages (46, 48) of the booster pump are arranged on a common shaft, and/or that the pump stages (18, 24, 26) of the mass-spectrometric turbomolecular pump (14) are arranged on a common shaft.

13. The device according to any one of the preceding claims, **characterized in that** the pre-vacuum pump is a separate vacuum pump independent of the booster pump and of the mass-spectrometric turbomolecular pump (14).

## Revendications

1. Dispositif destiné à la détection d'une fuite sur un objet à tester, comprenant un spectromètre de masse (12),
une pompe turbomoléculaire (14) à au moins trois étages, à savoir un étage d'entrée de pompage (18), un étage de pompage de milieu (26) et un étage de sortie de pompage (24), dont l'étage d'entrée de pompage est relié au spectromètre de masse (12) et qui comprend une première entrée de gaz intermédiaire (36) disposée entre l'étage d'entrée de pompage (18) et l'étage de pompage de milieu (26) et une deuxième entrée de gaz intermédiaire (42) disposée entre l'étage de pompage de milieu (26) et l'étage de sortie de pompage (24), et
une pompe à vide préliminaire (22) reliée à une sortie (20) de l'étage de sortie de pompage (24) de la pompe turbomoléculaire (14) et qui est configurée pour engendrer à la sortie (20) de la pompe turbomoléculaire (14) une pression de vide préliminaire de moins de 50 mbar et pour l'évacuer contre la pression atmosphérique,
**caractérisé en ce**
**que** le dispositif comprend en outre une pompe d'accélération (14) à au moins deux étages avec un étage d'entrée de pompage (46) et un étage de sortie de pompage (48) et dont l'étage d'entrée de pompage (46) peut être reliée à l'objet à tester et qui comprend une sortie de gaz intermédiaire (54) disposée entre l'étage d'entrée de pompage (46) et l'étage de sortie de pompage (48),
**que** la sortie de gaz intermédiaire (54) de la pompe d'accélération est reliée par une liaison conductrice de gaz, moyennant une première branche de liaison (62), à la première entrée de gaz intermédiaire (36) de la pompe turbomoléculaire (14) et
**qu'**une sortie (56) de l'étage de sortie de pompage (48) de la pompe d'accélération (44) est reliée par une liaison conductrice de gaz, moyennant une deuxième branche de liaison (64), à la deuxième entrée de gaz intermédiaire (42) de la pompe turbomoléculaire (14).

2. Dispositif selon la revendication 1, **caractérisé en ce que** la première branche de liaison (62) et/ou la deuxième branche de liaison (64) comprend une vanne (66, 68) pouvant être commandée séparément et destinée à la fermeture de la branche de liaison.

3. Dispositif selon la revendication 1 ou la revendication 2, **caractérisé en ce que** l'entrée de l'étage d'entrée de pompage (46) de la pompe d'accélération (44) est reliée par une liaison conductrice de gaz, moyennant une branche de dérivation (74), à l'entrée de la pompe à vide préliminaire (22), la branche de dérivation (74) comprenant une vanne (72) pouvant être commandée séparément et destinée à la fermeture de la branche de dérivation (74).

4. Dispositif selon l'une des revendications précédentes, **caractérisé en ce que** la première branche de liaison (62) et la deuxième branche de liaison (64) sont reliées l'une à l'autre par une liaison conductrice de gaz, moyennant une branche de pont (70), la branche de pont (70) pouvant comprendre une vanne pouvant être commandée séparément et destinée à la fermeture de la branche de pont (70).

5. Dispositif selon l'une des revendications précédentes, **caractérisé en ce que** le passage conducteur de gaz (28) reliant la sortie de l'étage de sortie de pompage (24) de la pompe turbomoléculaire (14) à l'entrée de la pompe à vide préliminaire (22) comprend une vanne (30) pouvant être commandée séparément et destinée à la fermeture du passage conducteur de gaz.

6. Dispositif selon l'une des revendications précédentes, **caractérisé en ce que** l'étage d'entrée (46) de la pompe d'accélération est une pompe à vide rotative.

7. Dispositif selon l'une des revendications précédentes, **caractérisé en ce que** l'étage de sortie (48) de la pompe d'accélération est un étage de pompe moléculaire, notamment un étage Holweck.

8. Dispositif selon l'une des revendications précédentes, **caractérisé en ce que** la pompe d'accélération est une pompe à vide à deux étages.

9. Dispositif selon l'une des revendications précédentes, **caractérisé en ce que** l'étage d'entrée et l'étage intermédiaire de la pompe turbomoléculaire (14) spectrométrique de masse forment une pompe turbomoléculaire (14) à deux étages.

10. Dispositif selon l'une des revendications précédentes, **caractérisé en ce que** l'étage de sortie de la pompe turbomoléculaire (14) spectrométrique de masse est un étage Holweck.

11. Dispositif selon l'une des revendications précédentes, **caractérisé en ce que** l'étage de sortie de la pompe turbomoléculaire (14) spectrométrique de masse est une pompe à vide à trois étages.

12. Dispositif selon l'une des revendications précédentes, **caractérisé en ce que** les étages de pompage (46, 48) de la pompe d'accélération sont disposés sur un arbre commun et/ou **en ce que** les étages de pompage (18, 24, 26) de la pompe turbomoléculaire (14) spectrométrique de masse sont disposés sur un arbre commun.

13. Dispositif selon l'une des revendications précédentes, **caractérisé en ce que** la pompe à vide préliminaire est une pompe à vide séparée indépendante de la pompe d'accélération et de la pompe turbomoléculaire (14) spectrométrique de masse.
